(19) Europäisches Patentamt
European Patent Office
Office européen des brevets

(11) Publication number: 0 373 783 A2

(12) EUROPEAN PATENT APPLICATION

(21) Application number: 89312279.6

(22) Date of filing: 27.11.89

(51) Int. Cl.5: C08G 65/48

(30) Priority: 12.12.88 GB 8828996

(43) Date of publication of application:
20.06.90 Bulletin 90/25

(84) Designated Contracting States:
AT BE CH DE ES FR GB IT LI LU NL SE

(71) Applicant: IMPERIAL CHEMICAL INDUSTRIES PLC
Imperial Chemical House, Millbank
London SW1P 3JF(GB)

(72) Inventor: McGrail, Patrick Terence
Whitehall Farm
Mickleby Saltburn Cleveland(GB)
Inventor: MacKenzie, Paul Dominic
42 Falcon Way
Guisborough Cleveland(GB)
Inventor: Parsons, Ian William
156 Oaktree Lane
Bournville Birmingham(GB)

(74) Representative: Graham, John George et al
Legal Dept. Patents PO Box 6 Bessemer Road
Welwyn Garden City Hertfordshire AL7 1HD(GB)

# (54) Aromatic polymer.

(57) Aromatic polymers comprise divalent aromatic units connected by ether and/or thioether linkages. The units are selected from single and/or multiple ring units. If present, the multiple ring units are connected by a direct linkage and/or by carbonyl, sulphonyl and/or sulphoxide linkages. At least one of the divalent aromatic units carries at least one haloalkyl radical or a functionalised derivative thereof linked to a nuclear carbon atom by a carbon-carbon bond.

A process for preparing polymers carrying a haloalkylradical involves the use of a haloalkylating agent in the presence of a Bronsted acid. Optionally the haloalkyl radical can be functionalised.

EP 0 373 783 A2

## Aromatic Polymer

This invention relates to an aromatic polymer and more particularly to an alkyl halide substituted polyarylether or polyarylthioether and to functionalised derivatives thereof and a process for the preparation thereof.

According to the present invention, an aromatic polymer comprises divalent aromatic units connected by ether and/or thioether linkages, said units being selected from single and/or multiple ring unit, said multiple ring units, if present, being connected by a direct linkage and/or by carbonyl, sulphonyl and/or sulphoxide linkages, at least one of said units carrying at least one haloalkyl radical or a functionalised derivative thereof linked to a nuclear carbon atom by a carbon-carbon bond.

By "functionalised derivative" is meant a derivative formed by reacting the haloalkylated polymer to convert said haloalkyl radical into a functional group such as a quaternary ammonium salt.

Typically, the haloalkyl radical is $C_1$ to $C_{10}$ alkyl.

The aromatic units of the polymer are preferably phenylene units. Particular examples of suitable multiple phenylene units are based on:

biphenyl
benzophenone
diphenyl sulphone
dibenzoylbenzene
bisbenzenesulphonylbenzene
bisbenzoylbiphenyl
bisbenzenesulphonylbiphenyl.

The positions of linkages to and within such multiple units can be mutually ortho, meta or para or a combination of more than one such position.

The aromatic units of the polymer can include polynuclear aromatic units such as the analogous units in the naphthalene series.

Preferred polymers contain both electron-withdrawing and electron-donating groups.

The said at least one unit of the polymer is linked to its neighbour in the polymer chain preferably through 2 electron-donating groups or one electron-donating group and one direct link. Preferably, the said at least one unit does not carry an electron- withdrawing group. A useful example of said at least one unit is dioxy phenylene, which can carry one haloalkyl radical or functionalised derivative thereof if the oxygens are mutually ortho or para or up to two haloalkyl halide radicals or functionalised derivatives thereof if the oxygens are mutually meta. Since the haloalkyl radical can be readily introduced to aromatic units so linked, polymers of a desired haloalkyl radical or functionalised derivative content can be made by choosing a starting polymer with the appropriate relative proportion of:-

(a) aromatic units carrying 2 electron-donating groups or one electron-donating group and one direct link; and

(b) aromatic units carrying or containing at least one electron-withdrawing group.

In particular, the starting polymer comprises units of structure

$0 - Ph^1 - O - Ph - A - Ph$ I

alone or in combination with units of structure

$0\ Ph - A - Ph - 0 - Ph - B - Ph$ II

where

Ph is paraphenylene

A and B are independently of one another, $SO_2$ or CO; and

$Ph^1$ is phenylene

The resulting family of polymers differing in haloalkyl radical or functionalised derivative content constitutes a particular feature of the invention.

The proportion of type (a) units can in principle be up to 100% of tha total aromatic units present. More usefully and conveniently it is up to 50%, such as in a polymer in which type (a) units or pairs thereof alternate with type (b) units preferably present as two such units linked together through a common electron-withdrawing group. A preferred polymer consists essentially of paraphenylene units linked through ether oxygen and alternating with 4,4′-diphenylsulphone; then the proportion of type (a) units is 33.3%. The proportion of type (a) units can be as low as for example 0.1%, more usually down to 1%. Not all the type (a) units need carry a haloalkyl radical or functionalised derivative thereof. The type (a) units can be distributed uniformly or randomly.

An especially convenient polymer is that represented by the units:-

O-Ph[1]-O-Ph-A-Ph I
alone or in combination with
O-Ph-A-Ph-0-Ph-B-Ph II
where:
Ph is paraphenylene;
A and B are $SO_2$ or CO (and can be the same or different in the polymer chain); and
Ph[1] comprises said at least one unit and is phenylene.

When both units are present, the percentage molar ratio of I to II is in the range 1-99, especially 10-90 and particularly 20-80.

The polymer according to the invention has a molecular weight ranging from a small oligomer having 2-5 aromatic units capable of carrying the haloalkyl radical or functionalised derivative thereof, up to about 100000, which is about the limit of melt-processibility. The range 1000-15000 is especially useful for polymers to be used in solution or to be processed in some way resulting in reaction to increase its molecular weight. The range 8000-50000 is especially useful for processing to self-supporting structures, for example films.

A process for the chloromethylation of a polysulphone of formula

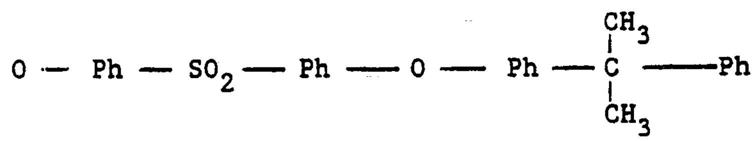

where Ph is paraphenylene
is described in an article by W H Daly et al entitled "Amination of Condensation Polymers" in "Polymeric Amines and Ammonium Salts" ed E J Goethals, Pergamon Press, New York 1980.

1,4 bis (chloromethoxy) butane and 1-chloromethoxy-4-chlorobutane are disclosed as suitable chloromethylating agents and the reactions are catalysed by Lewis acids, for example antimony pentachloride.

We have found that the aromatic polymers of the present invention cannot be prepared using this process. They can however, be prepared if alternative catalysts are used.

Thus, according to a further aspect of the invention there is provided a process for preparing an aromatic polymer in which at least one of said divalent aromatic units carries at least one haloalkyl radical, comprising reacting a starting polymer, which starting polymer comprises divalent aromatic units connected by ether and/or thioether linkages, said units being selected from single and/or multiple rings units, said multiple ring units, if present, being connected by a direct linkage and/or by carbonyl, sulphonyl and/or sulphoxide linkages, with a haloalkylating agent in the presence of a Bronsted acid.

In a preferred embodiment of the invention the haloalkylating agent is a chloromethylating agent, in particular chloromethylmethylether or a chloromethoxy compound, such as chloromethoxy-4-chlorobutane. A particularly preferred Bronsted acid is trifluoromethane sulphonic acid.

In a first particular polymer according to the invention, the haloalkyl radical is chloromethyl. It can be made by chloromethylating a polymer containing type (a) units and, to the extent required, type (b) units. Chloromethylation is carried out in the presence of a solvent such as 1,1,2,2-tetrachloroethane.

The fraction of type (a) units to which the chloroalkyl radical is added can be controlled by choice of temperature, time and chloroalkylating agent concentration.

The chloroalkylated polymer may have uses in its own right based on its physical properties; it is especially useful as an intermediate for making other polymers according to the invention.

In a second particular polymer according to the invention, the haloalkyl radical is converted into a functionalised derivative.

The invention provides a process for functionalising the haloalkylated polymer by making the quaternary ammonium salt of said haloalkyl radical.

Functionalisation can be achieved for example by nucleophilic substitution using a tertiary amine, alkyl or aryl, pyridines or quinolines.

In a preferred process, the haloalkylated polymer is reacted in solution in a suitable dipolar aprotic solvent such as dimethylsulphoxide with a suitable tertiary amine such as triethylamine.

The chloroalkyl group can also form a site for graft copolymerisation. The length of the aliphatic chain can be extended (by varying lengths to affect polymer properties) before the chain is converted into an amine on the terminal carbon of the chain and then into a maleimide group for cross-linking as a thermoset

polymer.

Polymers according to the invention can be further utilised as follows:-
aqueous solutions or dispersions, possibly containing pigment, for use as surface coatings; and
composites, in which the polymers are formulated with fibres, especially continuous carbon or glass, and are laid up to give laminates of a required level of isotropy.

The invention is illustrated by reference to the following Examples.

Example 1

a) A copolymer (25.0 g) containing 60 mole % I and 40 mole % II (A and B = $SO_2$, $Ph^1$ = paraphenylene), was dissolved in 1,1,2,2-tetrachloroethane (100 ml) by stirring the mixture and heating it to 60°C. To the resultant solution was add dropwise 1-chloromethoxy-4-chlorobutane (29.0g) followed by trifluoromethane sulphonic acid (5ml). The temperature of the solution was then raised to 90°C and maintained for 3 hours. The solution was then cooled and poured into methanol in a Waring blender. The grey precipitate was filtered, blended twice again with methanol and then dried under reduced pressure in an oven.

b) Copolymers containing the same repeat units in the molar ratios 5:95 and 10:90 were chloromethylated using a similar procedure but using different quantities of copolymer and different quantities of 1- chloromethoxy-4-chlorobutane.

The polymer of process a) was analysed by elemental analysis infrared (ir) spectroscopy and by $^{13}C$ 22.5 MHz and $^{1}H$ 400 MHz nuclear magnetic resonance (nmr) spectroscopy and the polymers of process b) were analysed by $^{1}H$ 400 MHz nmr spectroscopy.

The analysis showed monosubstitution with chloromethyl groups ($-CH_2Cl$) on substantially all of the dioxyphenylene units, but no substitution on any of the units II.

The polymers were readily soluble in tetrahydrofuran, dichloromethane, chloroform and dipolar aprotic solvents such as dimethylsulphoxide, N,N-dimethylformamide and N-methyl -2-pyrrolinone.

Example 2

Example 1a) was repeated using 10.0g of copolymer, 29.0g of 1-chloromethoxy-4-chlorobutane and 1ml of trifluoromethane-sulphonic acid and the resultant polymer was analysed using $^{1}H$ 60 MHz nmr spectroscopy. The analysis showed 31% of the dioxyphenylene units to be monochloromethylated, the remaining repeat units being unchanged.

The polymer displayed solubility characteristics similar to the polymers prepared in Example 1.

Example 3

A copolymer (10.0g), prepared as described in Example 1, was dissolved in dimethylsulphoxide (100 ml) by stirring the mixture and heating it to 60°C. Triethylamine (4.5 ml) was added to the solution. The temperature of the solution was maintained at 60°C for 6 hours. The polymer was precipated in methanol blended with methanol twice and then dried under reduced pressure in an oven.

The resultant polymer was analysed by $^{1}H$ 400 $MH_z$ nmr spectroscopy which showed approximately 50% of the chloromethyl groups had been converted to the quaternary ammonium chloride, ie.

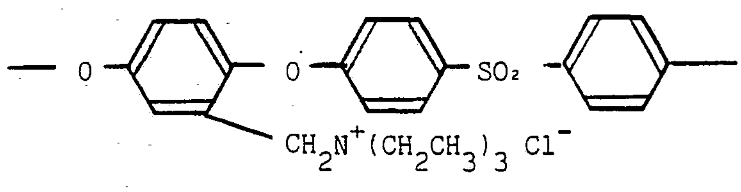

The following examples 4 and 5 were carried out using a procedure substantially identical to that disclosed in the article by W H Daly et al hereinbefore mentioned for the chloromethylation of polysulphone.

Example 4 (Comparative)

A polysulphone of formula

$$O - Ph - SO_2 - Ph - O - Ph - \underset{CH_3}{\overset{CH_3}{\underset{|}{\overset{|}{C}}}} - Ph$$

where Ph is paraphenylene, available commercially as UDEL PS (P1700) (Trade Name of Union Carbide) (3.8g, 8.6 mmoles) was dissolved in 1,1,2,2-tetrachloroethane (100ml) by heating the mixture to 60° C. The resultant solution was purged with nitrogen and chloromethoxy-4-chlorobutane (6.8g, 43.3 mmoles) added. Finally antimony pentachloride (0.5 ml, 3.9 mmoles) was added dropwise. The temperature of the solution was then raised to 110° C and maintained, with stirring, for 2 hours. The solution was then cooled, blended with ethanol and the precipitate filtered off. The precipitate was washed with water and then twice with methanol and finally dried under reduced pressure at 100° C in an oven.

The product of the process was analysed by $^1H$ 60 MHz nmr and found to be similar to that obtained by Daly et al which they considered to be consistent with the introduction of chlorine. The chemical shifts observed in the nmr were (δppm) 1.65 (s,$CH_3$); 4.65 (s,$CH_2Cl$), 6.90-7.60 (m, aromatic protons ortho to ether and alkyl groups) and 8.00 (d, aromatic protons ortho to sulphone groups). Expected shifts ($CDCl_3$): 1.68 (s, $CH_3$), 4.53 (s,$CH_2Cl$) 6.8-7.4 (m, aromatic protons ortho to ether and alkyl groups) and 7.90 (d, aromatic protons ortho to sulphone groups).

Example 5 (Comparative)

Example 4 was repeated using a copolymer (5.0 g, 1.5 mmoles) containing 10 mole % I and 90 mole % II (A and B = $SO_2$, $Ph^1$ = paraphenylene).

The product of the process was analysed by $^1H$ 60 MHz nmr spectroscopy. The analysis showed the product was the same as the starting material.

Examples 4 and 5 demonstrate that while the prior art process can be used to chloromethylate bisphenol-A type polysulphones it cannot be used to chloromethylate the aromatic polymers of the present invention.

Example 6 (Comparative)

A copolymer (5.0g) containing 60 mole % I and 40 mole % II (A and B = $SO_2$, $Ph^1$ = paraphenylene) was dissolved in 1,1,2,2-tetrachloroethane (100 $cm^3$) by stirring the mixture at 90° C. To the resultant solution chloromethyloctylether (32.8g) and tin IV chloride (4.0g) was added. The solution was stirred at 90° C for 24 hours. The product was precipitated in methanol, blended and filtered off. The product was then soxhlet extracted overnight using methanol and finally dried under reduced pressure at 100° C in an oven.

The product was analysed using $^1H$ 60 MHz nmr spectroscopy and found to be the same as the starting material.

This example further demonstrates that chloromethylation of the aromatic polymers of the invention is unsuccessful using a Lewis acid catalyst.

**Claims**

1. An aromatic polymer comprising divalent aromatic units connected by ether and/or thioether linkages, said units being selected from single and/or multiple ring units, said multiple ring units, if present, being connected by a direct linkage and/or by carbonyl, sulphonyl and/or sulphoxide linkages, at least one of said units carrying at least one haloalkyl radical or a functionalised derivative thereof linked to a nuclear carbon atom by a carbon-carbon bond.

2. An aromatic polymer according to claim 1 comprising divalent aromatic units carrying two-electron donating groups or one electron-donating group and one direct link alone or in combination with divalent aromatic units carrying or containing at least one electron-withdrawing group.

3. An aromatic polymer according to claim 1 comprising units of structure

O-Ph[1]-O-Ph-A-Ph I

alone or in combination with units of structure:

O-Ph-A-Ph-O-Ph-B-Ph II

wherein

Ph is paraphenylene;

A and B are, independently of one another, $SO_2$ or CO, and

Ph[1] is phenylene and carries said at least one haloalkyl radical or a functionalised derivative thereof.

4. An aromatic polymer according to claim 3 comprising units of structures I and II in a percentage molar ratio of I to II of 10 to 90.

5. A process for preparing an aromatic polymer as defined in claim 1 in which at least one of said divalent aromatic units carries said at least one haloalkyl radical, comprising reacting a starting polymer, which starting polymer comprises divalent aromatic units connected by ether and/or thioether linkages, said units being selected from single and/or multiple ring units, said multiple ring units, if present, being connected by a direct linkage and/or by carbonyl, sulphonyl and/or sulphoxide linkages, with a haloalkylating agent in the presence of a Bronsted acid.

6. A process according to claim 5 wherein the haloalkylating agent is a chloromethylating agent.

7. A process according to claim 5 wherein the Bronsted acid is trifluoromethane sulphonic acid.

8. A process for preparing an aromatic polymer as defined in claim 1 in which at least one of said divalent aromatic units carries at least one functionalised derivative of said haloalkyl radical comprising the process of claim 5 and further comprising the step of converting at least one said haloalkyl radical into a functionalised derivative, preferably a quaternary ammonium salt.

9. A process according to claim 5 wherein the starting polymer comprises divalent aromatic units carrying two electron-donating groups or one electron-donating group and one direct link alone or in combination with divalent aromatic units carrying or containing at least one electron-withdrawing group.

10. A process according to claim 5 wherein the starting polymer comprises units of structure

O-Ph[1]-O-Ph-A-Ph I

alone or in combination with units of structure

O-Ph-A-Ph-O-Ph-B-Ph II

wherein

Ph paraphenylene;

Ph[1] is phenylene; and

A and B are, independently of one another, $SO_2$ or CO.